# NEUE EUROPÄISCHE PATENTSCHRIFT

(11) **EP 0 265 663 B2**
(45) Veröffentlichungstag und Bekanntmachung des Hinweises auf die Entscheidung über den Einspruch: **20.10.1999**
(45) Hinweis auf die Patenterteilung: 18.11.1993
(21) Anmeldenummer: 87113809.5
(22) Anmeldetag: 22.09.1987
(51) Int. Cl.: B21D 39/04

(54) **Verfahren zur Herstellung einer gebauten Nockenwelle sowie gebaute Nockenwelle aus einem Wellenrohr und aufgeschobenen Elementen**
Method of producing a camshaft, as well as a camshaft made from a tube, and elements placed thereon
Méthode de fabrication d'un arbre à cames ainsi qu'arbre à cames fabriqué d'un tube et d'éléments mis sur ce tube

(30) Priorität: 01.10.1986 DE 3633435
(43) Veröffentlichungstag der Anmeldung: 04.05.1988
(73) Patentinhaber: Emitec Gesellschaft für Emissionstechnologie mbH, 53797 Lohmar (DE)
(72) Erfinder: Breuer, Hans-Jürgen, D-5063 Overath 5 (DE); Maus, Wolfgang, D-5060 Bergisch-Gladbach (DE); Schulze, Rudolf, D-5203 Much (DE); Swars, Helmut, D-5060 Bergisch-Gladbach (DE); Hanswillemenke, Hans, D-5000 Köln 80 (DE); Riemscheid, Helmut, D-5204 Wahlscheid (DE); Weiss, Karl, Dr., D-5205 St. Augustin (DE); Frielingsdorf, Herbert, D-5204 Lohmar (DE); Schwarz, Engelbert, D-5207 Ruppichteroth (DE); Grewe, Heribert, D-5063 Overath (DE); Greulich, Klaus, Dr., D-5357 Heimerzheim (DE)
(74) Vertreter: Sparing, Rolf Klaus, Dipl. Wirtsch.-Ing.

(56) Entgegenhaltungen:
- DE-A- 2 336 241
- DE-A- 3 401 057
- DE-A- 3 409 541
- FR-A- 2 328 108
- FR-A- 2 351 726
- GB-C- 1 530 519
- NL-C- 35 235
- PATENT ABSTRACTS OF JAPAN, Band 7, Nr. 179 (M-234)[1324], 9. August 1983; & JP-A-58 81 522 (KAWASAKI JUKOGYO K.K.) 16-05-1983

## Beschreibung

Die vorliegende Erfindung betrifft ein Verfahren zur Herstellung einer gebauten Nockenwelle aus einem Wellenrohr und aufgeschobenen Elementen mittels einer Aufweitung des Wellenrohres im Bereich der Elemente durch axial begrenzte hydraulische innere Druckbeaufschlagung, wobei das Material des einem Element zugeordneten Längsabschnittes des Wellenrohres beim Aufweiten insgesamt einer plastischen Verformung unterzogen wird, während das Material des jeweiligen Elements in der Randschicht den Zustand einer überwiegend elastischen Verformung annimmt. Bei den genannten aufgeschobenen Elementen kann es sich um Steuernocken, Lagerringe und Zahn- oder Kegelräder handeln, die drehfest und winkelgenau mit dem Wellenrohr verbunden sein müssen.

Es sind gebaute Nockenwellen bekannt, bei denen fertigbearbeitete Nocken und Lagerringe nach thermischen Verfahren auf ein Wellenrohr aufgeschrumpft werden (DE-OS 33 01 749). Hierbei ist die Werkstoffwahl der Elemente dadurch beschränkt, daß für die Schrumpfverfahren bestimmte spezifische Wärmedehnungswerte der Werkstoffe erforderlich sind, um die erforderlichen Passungen herzustellen. Um eine ausreichende Spannung zwischen Wellenrohr und Elementen zur drehfesten Verbindung sicherzustellen, sind auch an den Wellenwerkstoff bestimmte erhöhte Anforderungen an Festigkeit und Oberflächenhärte zu stellen. Das Fügen des Wellenrohres und der Elemente ist aufgrund der erforderlichen Temperaturbehandlung langwierig und aufwendig. Durch die Temperaturerhöhung beim Fügen ist ein Härteverlust der Elemente unvermeidlich.

Es sind weiterhin Nockenwellen bekannt, bei denen einzelne Nocken formschlüssig auf Profilstäbe aufgeschoben und beispielsweise durch Schrumpfen, Frosten, Löten, Schweißen oder Verkleben mit diesen verbunden werden (DE-OS 23 36 241, DE-GM 79 20 957). Gegenüber üblichen Nockenwellen lassen sich hiermit keine Gewichtsvorteile erzielen, ein Ändern oder Anpassen der Winkellage der Nocken bedingt eine völlige Umgestaltung der Bauteile.

Daneben ist es bekannt, innenrunde Nocken und Lagersitze auf einem Wellenrohr rein kraftschlüssig festzulegen, indem das Wellenrohr über seiner ganzen Länge durch Innendruck aufgeweitet wird, wobei zur Aufrechterhaltung des Preßsitzes angesichts des dünnwandigen Rohres das Rohr mit einer Kunststoffmasse verfüllt werden muß (DE-PS 32 27 693). Ohne diese Zusatzmaßnahme ist es bisher nicht möglich gewesen, einen sicheren drehmomentbelastbaren Festsitz zu erzeugen. Das Aufweiten über die gesamte Länge beinhaltet die Gefahr von Ausbauchungen in den Bereichen zwischen den Nocken, wobei an den Stirnflächen der Nocken eine Kerbwirkung entstehen kann, die die Wellenfestigkeit herabsetzt.

Aus der FR-A-2 351 726 ist es bekannt, Wärmetauscherrohre durch in Abschnitten vollzogenes hydraulisches Aufweiten in Bohrungen im Rohrboden festzulegen. Die Funktion der Bauteile und damit die Bauteilbelastung sind ganz andersartig zu beurteilen. Hinweise auf eine Bemessung des Verformungsbereiches der Wärmetauscherrohre werden nicht gegeben.

Die DE 34 09 541 A1 offenbart ein Verfahren zur Herstellung einer Hohlwelle mit Kontruktionselementen wie Zahnrädern, Kurvenscheiben oder dergleichen, bei dem die Hohlwelle über ihre gesamte Länge aufgeweitet und plastisch umgeformt wird. Die Bereiche zwischen den Elementen werden dabei über den Durchmesser von Bohrungen in den Elementen hinaus aufgeweitet, wodurch schädliche Kerbspannungen entstehen können.

Es ist weiterhin bekannt, eine Nockenwelle, bestehend aus einer Hohlwelle und aus mit Längs- oder Umfangsnuten versehenen Lagersitzen und Nocken, dadurch zu verbinden, daß das Wellenrohr abschnittsweise mittels Innendruck aufgeweitet und in die Nuten eingepreßt wird (DE-PS 25 46 802 bzw. FR 2 328 108). Hierbei sind auch die Nocken mit gleichmäßiger Wandstärke rohrartig ausgebildet, so daß ein umlaufender Sitz auf der Welle unmöglich ist und somit die Festigkeit der Nocken nicht als gewährleistet erscheint.

Der vorliegenden Erfindung liegt die Aufgabe zugrunde, ein Verfahren der eingangs genannten Art zur Herstellung einer gebauten Nockenwelle bereitzustellen, das einfach und billig durchführbar ist und bei dem eine Welle mit hoher Drehmomentübertragungskapazität bei einer vergrößerten Freiheit in der Werkstoffauswahl für Wellenrohr und Nocken bzw. Lagersitze möglich wird.

Die Lösung hierfür besteht in einem Verfahren, das sich dadurch auszeichnet, daß die Aufweitung des Rohres jeweils auf einem Längsabschnitt erfolgt, der an jeder Seite die Länge des zugeordneten Elements um einen Überstand von mindestens 50 % und höchstens 150 % der Wanddicke des Rohres übertrifft, wobei die Verbindung zwischen dem Element und dem Wellenrohr im Kraftschluß erfolgt. Hiermit wird in vorteilhafter Weise sichergestellt, daß eine vollständige und im wesentlichen spannungsgleiche Anschmiegung der Rohrwandung an die Durchgangsöffnung des Elementes auf der gesamten Länge erfolgt, wodurch die Gefahr von Mikroschlupf verringert und die Möglichkeit von Passungskorrosion ausgeschlossen wird. Zugleich wird verhindert, daß es zu Ausbauchungen des Rohres mit Kerbwirkungen an den Stirnflächen der Elemente kommen kann. Besondere Bedingungen ergeben sich, wenn mehrere Elemente eng benachbart liegen, wie es insbesondere bei sogenannten Drei- oder Vierventilmotoren, d.h. bei einer Anordnung von drei oder vier Ventilen je Zylinder der Fall ist. Hierbei ist das erfindungsgemäße Verfahren dahingehend abzuwandeln, daß die Aufweitung des Wellenrohres in einem zwei oder mehr Elemente überdeckenden Bereich zugleich vollzogen wird. Sofern dies nur bis zu einem Höchstmaß des freien Abstandes der Elemente bis zu 40 % der Wanddicke des Rohres erfolgt, ist ein Ausbeulen des Rohres nicht zu besorgen und ein gleichmäßiger Festsitz der verschiedenen Elemente sichergestellt.

Auf diese Weise werden ohne thermische Verfahrensschritte Festsitze erzeugt, die eine Drehmomentübertragung zulassen, die bis zu 80 % der Torsionsfestigkeit der Welle erreicht. Als Wellenwerkstoff können dabei relativ geringwertige Materialien wie St 35 bis St 52 verwendet werden, während für die Nocken und Lagersitze Werkstoffe großer Festigkeit zum Einsatz kommen können. Das Fügen beeinträchtigt die Materialwerte beider Werkstoffe nicht. Da die Herstellung der Verbindung ohne äußere Wärmezufuhr erfolgt und auch keine Wärmebehandlung zum Spannungsfreimachen erforderlich ist, tritt weder eine die Verbindung beeinträchtigende Materialstrukturveränderung noch ein Härteverlust auf. Die auftretenden Maßveränderungen beim Aufweiten sind - anders als bei einer Wärmebehandlung - kalkulierbar. Durch die größere Freiheit der Werkstoffwahl für die Elemente kann eine verbesserte Anpassung des Nockenmaterials an unterschiedliche Belastungen vorgenommen werden. Es sind hierbei Nocken und Lagersitze aus unterschiedlichen Materialien einsetzbar, ohne daß die notwendige Drehmomentübertragung gefährdet ist. Geeignete Verfahren und Vorrichtungen zum hydraulischen Aufweiten einzelner Längsabschnitte sind einfach und kostengünstig darzustellen. In weiterhin vorteilhafter Weise verbleibt nach dem erfindungsgemäßen Verfahren der Innenquerschnitt des Wellenrohres offen, um auf diese Weise eine Wellenkühlung und Innenschmierung der Lagersitze zu ermöglichen. Die nach dem erfindungsgemäßen Verfahren hergestellte Welle baut leicht und kann bei entsprechender Berücksichtigung der Fügevorgänge ohne nachgeordnete Schleifvorgänge der Nocken oder Lagersitze fertiggestellt werden. Die Darstellbarkeit geringer Abstände der festzulegenden Elemente und an die Funktion spezifisch angepaßte Werkstoffe ermöglichen größere Freiheiten bei der entsprechenden Zylinderkopfkonstruktion.

Das erfindungsgemäße Verfahren wird insbesondere dann optimal dargestellt, wenn die Differenz Uₘᵢₙ zwischen Wellenaußendurchmesser dₐ und Elementinnendurchmesser Dᵢ vor dem Aufweiten zumindest das 0,9 fache des Außendurchmessers, multipliziert mit dem Quotienten aus 0,2 % - Streckgrenze Rₚ und Elastizitätsmodul E eingestellt wird. Bei Einstellung dieser Werte kommt es zu der gewünschten elastischen Vorspannung in der Randschicht der Durchgangsöffnung des kraftschlüssig festgelegten Elements.

Nach einer günstigen Ausgestaltung reicht die plastische radiale Randverformung an der Durchgangsöffnung der Elemente bei Verwendung duktilen Werkstoffs wie Stahl bis zu einer Materialtiefe, die etwa 10 bis 15 % der geringsten radialen Wanddicke der Elemente beträgt. Hierdurch werden ausreichende Verbindungskräfte erzielt, ohne daß die Festigkeit der Elemente beeinträchtigt ist. Bei harten Werkstoffen wie Guß ist eine plastische Randverformung in dieser Größenordnung nicht möglich und auch nicht erforderlich. In weiterhin günstiger Weise soll die auftretende Dehnung in der Außenzone der Elemente in tangentialer Richtung nach dem Aufweiten in der Größenordnung bis 1 % eingestellt werden, um Schäden bei zusätzlicher Belastung im Einsatz in der Oberfläche auszuschließen. Bei Verwendung duktilen Werkstoffs wie Stahl liegt der bevorzugte Wertebereich für die Dehnung zwischen 0,1 und 0,4 %, während bei spröden Werkstoffen wie Guß die Dehnungswerte zwischen 0,01 und 0,2 % liegen sollen.

In üblicher und günstiger Weise wird das erfindungsgemäße Verfahren so durchgeführt, daß zum Aufweiten im Bereich von Nocken hydraulische Innendrücke von 2000 bis 3500 bar dagegen zum Aufweiten der Welle im Bereich der dünnwandigeren Lagersitze hydraulische Innendrücke im Bereich von 1000 bis 2500 bar angewandt werden.

Nach einer bevorzugten Weiterbildung soll ein Material für das Wellenrohr mit einer um 25 bis 35 % geringeren Zugfestigkeit gegenüber dem Material der Elemente gewählt werden. Dies begünstigt die angestrebte Art der Verbindung und ermöglicht die Auswahl relativ weicher Wellenwerkstoffe aus Kostengründen.

Als Nocken können in günstiger Weise vor dem Fügen fertigbearbeitete Guß-, Stahl- oder Sinterelemente verwendet werden, wobei Werkstoffe hoher Härte die z. B. Kugellagerstahl zur Erhöhung der Lebensdauer der fertigen Nockenwelle ausgewählt werden können, ohne daß dies die Festigkeit der Verbindung beeinträchtigt.

Die vorstehend erläuterte Erfindung ist in Anwendung des zugrundeliegenden Gedankens auch auf das Einsetzen von Hohlzapfen in Bohrungen, das Verbinden zweier Rohre mittels einer Rohrmuffe oder das Verbinden zweier ineinandergesteckter Rohrstücke sinngemäß anzuwenden. Einige Einzelheiten der Erfindung sind anhand der beigefügten Zeichnungen verdeutlicht.
- Fig. 1a: zeigt einen Längsschnitt durch eine Verbindungsstelle vor dem Fügen von Nocken und Rohrkörper

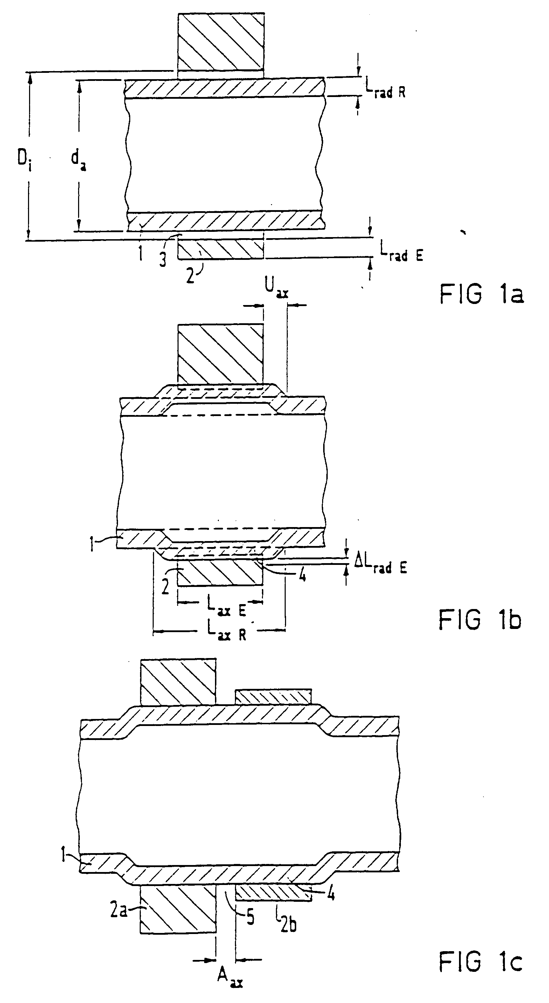

- Fig. 1b: zeigt eine Verbindungsstelle nach Fig. 1a nach dem Fügen
- Fig. 1c: zeigt eine Verbindungsstelle mit zwei benachbarten Elementen nach dem Fügen

In den Figuren ist jeweils das Rohr mit 1 und das aufgesetzte Element mit 2, dabei insbesondere ein Nocken mit 2a und eine Lagerbuchse mit 2b bezeichnet. Die in den Patentansprüchen und der Beschreibung angegebenen Längen und sonstigen Größen sind mit den jeweiligen Kennbuchstaben angegeben.

In Fig. 1a ist dargestellt, daß vor dem Fügen zwischen dem Rohr 1 und dem Nocken 2 ein Umfangsspalt 3 vorhanden ist.

In Fig. 1b ist die Querschnittsveränderung des Rohres nach dem Fügen erkennbar, wobei insbesondere die begrenzte Länge des aufgeweiteten Rohrabschnitts 4 deutlich ist.

In Fig. 1c ist ein aufgeweiteter Rohrabschnitt 4 gezeigt, der zwei benachbarte aufgeschobene Elemente 2a und 2b überdeckt, die einen geringen freien Abstand 5 voneinander haben.

## Patentansprüche

1. Verfahren zur Herstellung einer gebauten Nokkenwelle aus einem Wellenrohr und aufgeschobenen Elementen wie Steuernocken, Lagerringen, Zahn- oder Kegelrädern, mittels einer Aufweitung des Wellenrohres im Bereich der Elemente durch axial begrenzte hydraulische innere Druckbeaufschlagung, wobei das Material des einem Element zugeordneten Längsabschnittes des Wellenrohres beim Aufweiten insgesamt einer plastischen Verformung unterzogen wird, während das Material des jeweiligen Elementes in der Randschicht den Zustand einer überwiegend elastischen Verformung annimmt,
dadurch gekennzeichnet,
daß die Aufweitung des Rohres jeweils auf einem Längsabschnitt L_{ax R} erfolgt, der an jeder Seite die Länge L_{ax E} des zugeordneten Elementes um einen Überstand Uₐₓ von mindestens 50 % und höchstens 150 % der Wanddicke L_{rad R} des Rohres übertrifft, wobei eine Verbindung zwischen dem Element und dem Wellenrohr im Kraftschluß erfolgt.

2. Verfahren nach Anspruch 1,
dadurch gekennzeichnet,
daß die Differenz Uₘᵢₙ zwischen dem Rohraußendurchmesser dₐ und dem Elementen-Innendurchmesser Dᵢ vor dem Aufweiten zumindest das 0,9-fache des Wertes des Rohraußendurchmessers dₐ multipliziert mit dem Quotienten aus 0,2 % - Steckgrenze Rₚ und Elastizitätsmodul E des Rohrwerkstoffes beträgt.

3. Verfahren nach einem der Ansprüche 1 bis 2,
dadurch gekennzeichnet,
daß die Aufweitung des Rohres einheitlich auf einem Längsabschnitt erfolgt, der zwei benachbarte Elemente überdeckt, wenn der freie Abstand Aₐₓ zwischen den zwei Elementen weniger als 40 % der Wanddicke L_{rad R} des Rohres beträgt.

4. Verfahren nach einem der Ansprüche 1 bis 3,
dadurch gekennzeichnet,
daß die plastische radiale Randverformung in der Durchgangsöffnung eines insbesondere aus Stahl bestehenden Elements während des Aufweitens bis zu einer Materialtiefe Δ L_{rad} reicht, die 10 bis 15 % der geringsten Wanddicke L_{rad E} des Elements beträgt.

5. Verfahren nach einem der Ansprüche 1 bis 4,
dadurch gekennzeichnet,
daß die Dehnung in der Außenzone des Elements in tangentialer Richtung nach dem Aufweiten vorzugsweise in der Größenordnung von bis zu 1 % liegt.

6. Verfahren nach Anspruch 5,
dadurch gekennzeichnet,
daß bei Verwendung eines duktilen Werkstoffs - wie Stahl - für das Element die Dehnung in der Außenzone nach dem Aufweiten zwischen 0,1 und 0,4 % liegt.

7. Verfahren nach Anspruch 5,
dadurch gekennzeichnet,
daß bei Verwendung eines harten Werkstoffs - wie Guß- oder Sintermaterial - für das Element die Dehnung in der Außenzone nach dem Aufweiten zwischen 0,01 und 0,2 % liegt.

8. Verfahren nach einem der Ansprüche 1 bis 7,
dadurch gekennzeichnet,
daß ein Material für das Wellenrohr mit einer um 25 bis 35 % geringeren Zugfestigkeit Rₘ gegenüber dem Material der Elemente ausgewählt wird.

9. Verfahren nach Anspruch 8,
dadurch gekennzeichnet,
daß als Wellenrohr ein gezogenes - in der Oberfläche vorzugsweise unbearbeitetes - Präzisionsrohr verwendet wird, insbesondere aus einem Werkstoff wie St 35 bis St 52.

10. Verfahren nach einem der Ansprüche 8 oder 9,
dadurch gekennzeichnet,
daß als Nocken Guß-, Stahl- oder Sinterelemente von großer Härte - bevorzugt vor dem Fügen fertig bearbeitet - verwendet werden, z.B. Nocken aus Kugellagerstahl.

## Claims

1. A process for the production of a built-up camshaft comprising a shaft tube and elements which are pushed thereon such as control cans, bearing rings, spur or bevel gears, by means of an expansion of the shaft tube in the region of the elements by axially limited hydraulic internal pressure application, wherein in the expansion operation the material of the longitudinal portion of the shaft tube, which is associated with an element, is wholly subjected to plastic deformation while the material of the respective element in the edge layer assumes the condition of predominantly elastic deformation,
characterised in that
expansion of the tube is effected in each case on a longitudinal portion L _{ax R} which at each side exceeds the length L_{ax E} of the associated element by a surpassing length Uₐₓ of at least 50% and at most 150% of the wall thickness L_{rad R} of the tube, a connection being effected between the element and the shaft tube by pressure-locking engagement.

2. A process according to claim 1 characterised in that the difference Uₘᵢₙ between the tube outside diameter dₐ and the elements inside diameter Dᵢ prior to the expansion operation is at least 0.9 times the value of the tube outside diameter dₐ multiplied by the quotient of the 0.2% yield point Rₚ and the modulus of elasticity E of the tube material.

3. A process according to one of claims 1 and 2 characterised in that expansion of the tube is effected uniformly on a longitudinal portion which covers two adjacent elements if the free spacing Aₐₓ between the two elements is less than 40% of the wall thickness L_{rad R} of the tube.

4. A process according to one of claims 1 to 3 characterised in that the plastic radial edge deformation in the through opening of an element which in particular comprises steel extends during the expansion operation to a material depth ΔL_{rad} which is from 10 to 15% of the least wall thickness L_{rad E} of the element.

5. A process according to one of claims 1 to 4 characterised in that the stretch in the outside zone of the element in the tangential direction after the expansion operation is preferably of the order of magnitude of up to 1%.

6. A process according to claim 5 characterised in that, when using a ductile material such as steel for the element, the stretch in the outside zone after the expansion operation is between 0.1 and 0.4%.

7. A process according to claim 5 characterised in that when using a hard material such as cast or sintered material for the element the stretch in the outside zone after the expansion operation is between 0.01 and 0.2%.

8. A process according to one of claims 1 to 7 characterised in that a material is selected for the shaft tube, with a tensile strength Rₘ which is 25 to 35% lower than the material of the elements.

9. A process according to claim 8 characterized in that the shaft tube used is a drawn precision tube which is preferably unworked at its surface, in particular comprising a material such as St 35 to St 52.

10. A process according to one of claims 8 or 9 characterized in that the cans used are cast, steel or sintered elements of great hardness, preferably being subjected to finishing working prior to the assembly operation, for sample cans of ball bearing steel.

## Revendications

1. Procédé de fabrication d'un arbre à cames constitué d'un tube ondulé et d'éléments enfilés sur ce tube, tels que des cames de commande, des bagues de palier, des roues dentées ou coniques, au moyen d'un élargissement du tube ondulé dans la région des éléments par une sollicitation intérieure, axialement limitée, en pression hydraulique, le matériau du tronçon longitudinal du tube ondulé qui est associé à un élément subissant globalement une déformation plastique lors de l'élargissement, tandis que le matériau de l'élément respectif prend, dans la couche marginale, l'état d'une déformation principalement élastique,
**caractérisé** en ce que l'élargissement du tube s'effectue chaque fois sur un tronçon longitudinal L_{ax R} qui dépasse de chaque côté la longueur L_{ax E} de l'élément associé d'un montant Uₐₓ égal à au moins 50 % et au plus 150 % de l'épaisseur de paroi L_{rad R} du tube, une liaison par adhérence s'effectuant entre l'élément et le tube ondulé.

2. Procédé selon la revendication 1, **caractérisé** en ce que la différence Uₘᵢₙ entre le diamètre extérieur dₐ du tube et le diamètre intérieur Dᵢ de l'élément est égale, avant l'élargissement, à au moins 0,9 fois la valeur du diamètre extérieur dₐ du tube, multipliée par le quotient de la limite élastique 0,2 % Rₚ et du module d'élasticité E du matériau du tube.

3. Procédé selon la revendication 1 ou 2, **caractérisé** en ce que l'élargissement s'effectue unitairement sur un tronçon longitudinal couvrant deux éléments voisins, si la distance libre Aₐₓ entre les deux éléments est inférieure à 40 % de l'épaisseur de paroi L_{rad R} du tube.

4. Procédé selon l'une quelconque des revendications 1 à 3, **caractérisé** en ce que la déformation plastique marginale radiale dans l'ouverture traversante d'un élément réalisé notamment en acier atteint, pendant l'élargissement, une profondeur de matériau Δ L_{rad} qui est égale à 10 à 15 % de l'épaisseur de paroi minimale L_{rad E} de l'élément.

5. Procédé selon l'une quelconque des revendications 1 à 4, **caractérisé** en ce que l'allongement en direction tangentielle dans la zone extérieure de l'élément, à la suite de l'élargissement, est de préférence de l'ordre d'au plus 1 %.

6. Procédé selon la revendication 5, **caractérisé** en ce qu'en cas d'utilisation d'un matériau ductile pour l'élément, tel que de l'acier, l'allongement dans la zone extérieure à la suite de l'élargissement est compris entre 0,1 et 0,4

7. Procédé selon la revendicationion 5, **caractérisé** en ce qu'en cas d'utilisation d'un matériau dur pour l'élément, tel que de la fonte ou un matériau fritté, l'allongement dans la zone extérieure à la suite de l'élargissement est compris entre 0,01 et 0,2 %.

8. Procédé selon l'une quelconque des revendications 1 à 7, **caractérisé** en ce qu'on choisit pour le tube ondulé un matériau présentant une résistance à la traction Rₘ inférieure de 25 à 35 % à celle du matériau des éléments,

9. Procédé selon la revendication 8, **caractérisé** en ce qu'on utilise comme tube ondulé un tube étiré de précision, à surface de préférence non usinée et constitué notamment d'un matériau tel que de l'acier St 35 à St 52.

10. Procédé selon la revendication 8 ou 9, **caractérisé** en ce qu'on utilise comme cames des éléments en fonte, en acier ou en matériau fritté, de dureté élevée et ayant de préférence subi un usinage de finition avant l'assemblage, par exemple des cames en acier pour roulements à billes.
